# EUROPEAN PATENT APPLICATION

(11) **EP 3 834 681 A1**
(43) Date of publication of application: **16.06.2021**
(21) Application number: 19215499.5
(22) Date of filing: 12.12.2019
(51) Int. Cl.: A47J 37/06

(54) **A COOKING APPARATUS**

(71) Applicant: Koninklijke Philips N.V., 5656 AG Eindhoven (NL)
(72) Inventor: Bonaccorso, Davide, 5656 AE Eindhoven (NL)
(74) Representative: Philips Intellectual Property & Standards

(57) **Abstract**

There is provided a cooking apparatus (100) comprising: a cooking chamber (110) configured to receive a food item; an infrared lighting unit (120) comprising one or more infrared light sources configured to provide infrared radiation to the food item received in the cooking chamber, the infrared lighting unit being positioned such that the food item is exposed to infrared radiation from the one or more infrared light sources; a shielding unit (130) comprising one or more shielding elements respectively positioned between each of the one or more infrared light sources of the infrared lighting unit and the cooking chamber; a first air guiding unit (140) configured to conduce air flow through the shielding unit; and a second air guiding unit (150) configured to circulate hot air inside the cooking apparatus to heat the food item received inside the cooking chamber.

## Description

### FIELD OF THE INVENTION

The present disclosure relates to a cooking apparatus. In particular, the present disclosure also relates to a cooking apparatus including infrared light functionalities.

### BACKGROUND OF THE INVENTION

An example for a cooking apparatus is the Philips air fryer, which is an appliance that can cook food, for example fries or chicken, with hot air. In order to heat the food for the preparation of the food, a flow of hot air is moved over the food to heat the same, respectively blown through the food containing volume for heating purposes. Such an appliance can be used, for example, in the household environment. Compared to conventional frying techniques, air fryers are perceived to be a healthier option for cooking foods as typically less cooking oil is required to prepare the same amount of food. For an optimized food preparation procedure, in air fryers a high air flow rate through the entire food containing volume is preferable to ensure a relatively short cooking time and high food quality. Although air fryers typically use less cooking oil in comparison with other frying methods such as deep frying, currently available air fryers continue to suffer the problem of undesired smoke and smell emission as well as being difficult to clean. The smoke produced by air fryers may trigger smoke detector alarms or air purifiers and cause unwanted disturbance during usage.

### SUMMARY OF THE INVENTION

There are some currently available solutions that aim to reduce smoke emissions from cooking appliances such as air fryers. However, these solutions typically come with certain unwanted compromises. Moreover, these solutions also do not address issues relating to cleanability or undesirable smells. It would therefore be advantageous to provide an improved cooking apparatus which address these issues without involving compromises on user experience.

To better address one or more of the concerns mentioned earlier, in a first aspect, a cooking apparatus is provided. The cooking apparatus comprises: a cooking chamber configured to receive a food item; an infrared lighting unit comprising one or more infrared light sources configured to provide infrared radiation to the food item received in the cooking chamber, the infrared lighting unit being positioned such that the food item is exposed to infrared radiation from the one or more infrared light sources; a shielding unit comprising one or more shielding elements respectively positioned between each of the one or more infrared light sources of the infrared lighting unit and the cooking chamber; a first air guiding unit configured to conduce air flow through the shielding unit; and a second air guiding unit configured to circulate hot air inside the cooking apparatus to heat the food item received inside the cooking chamber.

In some embodiments, the cooking apparatus may further comprise a heating unit comprising one or more heating elements configured to heat air flow inside the cooking apparatus to create hot air circulation.

In some embodiments, the heating unit may be positioned so as to correspond to the configuration of the second air guiding unit such that heated air generated at the heating unit can be conduced by the second air guiding unit to heat the food item received inside the cooking chamber.

In some embodiments, the first air guiding unit may comprise a first fan and a first air duct arrangement configured to conduce air flow towards the shielding unit.

In some embodiments, the second air guiding unit may comprise a second fan and a second air duct arrangement, the second fan being configured to conduce air flow from the cooking chamber towards the second air duct arrangement.

In some embodiments, one or more heating elements may be configured to heat the air from the cooking chamber in the second air duct arrangement.

In some embodiments, the second air duct arrangement may be configured to facilitate air flow towards the food item received in the cooking chamber.

In some embodiments, the second air duct arrangement may be perpendicular to an axis of symmetry which intersects the one or more infrared light sources.

In some embodiments, the one or more shielding elements may be arranged in the first air duct arrangement of the first air guiding unit, such that air flow from the first fan is conduced along the one or more shielding elements.

In some embodiments, each of the one or more shielding elements may comprise a first shielding part and a second shielding part. The first shielding part may be positioned between the first air duct arrangement and the respective infrared light source, and the second shielding part may be positioned between the first air duct arrangement and the cooking chamber. In these embodiments, at least one of the first shielding part and the second shielding part of each of the one or more shielding elements may be configured to be removable from the rest of the respective shielding element.

In some embodiments, the one or more shielding elements may comprise material having a permeability level to infrared radiation above a predetermined threshold.

In some embodiments, the infrared lighting unit may comprise a first infrared light source and a second infrared light source, the first infrared light source being positioned such that it corresponds to a first side of the cooking apparatus and the second infrared light source being positioned such that it corresponds to a second side of the cooking apparatus, wherein the first side is opposite to the second side.

In some embodiments, each of the one or more infrared light sources may be configured such that it provides infrared radiation towards the food item received in the cooking chamber in a tilted angle.

In some embodiments, the infrared lighting unit may be configured such that, in a self-cleaning mode of the cooking apparatus, the one or more infrared light sources are configured to operate for a predetermined time period in order to increase the temperature at the respective one or more shielding elements.

According to the aspects and embodiments described above, the limitations of existing techniques are addressed. In particular, the above-described aspects and embodiments enable smoke and smell emissions in cooking appliances (e.g. air fryers) to be reduced while improving the cleanability of the appliances. The embodiments described above also offer an approach to implement different ways for cooking foods at a cooking apparatus. In this way, the embodiments as described in the present disclosure provide an efficient cooking apparatus that has a good usability.

There is thus provided an improved cooking apparatus. These and other aspects of the disclosure will be apparent from and elucidated with reference to the embodiment(s) described hereinafter.

### BRIEF DESCRIPTION OF THE DRAWINGS

For a better understanding of the embodiments, and to show more clearly how they may be carried into effect, reference will now be made, by way of example only, to the accompanying drawings, in which:
Fig. 1 is a block diagram of a cooking apparatus according to an embodiment;
Fig. 2A is a top view of a cooking apparatus according to another embodiment;
Fig. 2B is a cross-sectional view of the cooking apparatus of Fig. 2A;
Fig. 2C is another cross-sectional view of the cooking apparatus of Fig. 2A;
Fig. 2D is a partial cross-sectional view of the infrared lighting unit and the shielding unit of the cooking apparatus of Fig. 2A;
Fig. 3 is a partial cross-sectional view of a cooking apparatus according to another embodiment;
Fig. 4 is a partial cross-sectional view of a cooking apparatus according to another embodiment; and
Fig. 5 is a partial cross-sectional view of a cooking apparatus according to another embodiment.

### DETAILED DESCRIPTION OF THE EMBODIMENTS

As noted above, there is provided an improved cooking apparatus which addresses the existing problems.

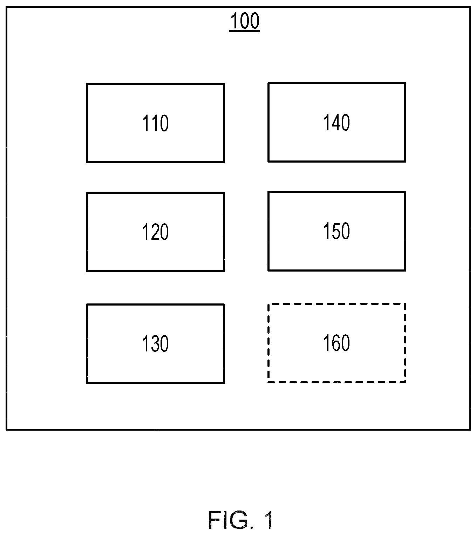

Fig. 1 shows a block diagram of a cooking apparatus 100 according to an embodiment. The cooking apparatus 100 may be an air fryer, a steam oven, or a cooking grill. As illustrated in Fig. 1, the cooking apparatus 100 comprises a cooking chamber 110, an infrared lighting unit 120, a shielding unit 130, a first air guiding unit 140, and a second air guiding unit 150, and a heating unit 160.

The cooking chamber 110 is configured to receive a food item. In some embodiments, the cooking chamber may be a removable container. Also, in some embodiments, at least one surface (e.g. a side wall, or a bottom surface) may be at least partly air-permeable.

In the present embodiment, the infrared lighting unit 120 comprises one or more infrared light source (not shown in this Fig. 1), the infrared light source(s) being configured to provide infrared radiation to the food item received in the food chamber. The infrared lighting unit 120 is positioned such that the food item received in the cooking chamber 110 is exposed to infrared radiation from the one or more infrared light sources. For example, in some embodiments, the infrared lighting unit 120 may be positioned above the cooking chamber 110. The one or more infrared light sources may be configured such that they provide infrared radiation towards the food item receive in the cooking chamber 110 in a (respectively) tilted angle.

In some embodiments, the infrared lighting unit 120 may comprise a first infrared light source and a second infrared light source. The first infrared light source may be positioned such that it corresponds to a first side of the cooking apparatus 100 and the second infrared light source may be positioned such that it corresponds to a second side of the cooking apparatus 100. In this case, the first side is opposite to the second side.

The shielding unit 130 comprises one or more shielding elements which are respectively positioned between each of the one or more infrared light sources of the infrared lighting unit 120 and the cooking chamber 110. The one or more shielding elements may comprise material having an infrared radiation permeability level above a predetermined threshold, e.g. glass. Also, each of the one or more shielding elements may comprise a first shielding part and a second shielding part. At least one of the first shielding part and the second shielding part of each of the one or more shielding elements may be configured to be removable from the rest of the respective shielding element.

In some embodiments, the infrared lighting unit 120 may be configured such that, in a self-cleaning mode of the cooking apparatus 100, the one or more infrared light sources are configured to operate for a predetermined time period in order to increase the temperature at the respective one or more shielding elements. By increasing the temperature at the shielding elements(s), the food soils deposited on the shielding element(s) can start to decompose and leave behind a small amount of ash, which can then be removed easily.

The first air guiding unit 140 is configured to conduce air flow through the shielding unit 130, and the second air guiding unit 150 is configured to circulate hot air inside the cooking apparatus 100 to heat the food item received inside the cooking chamber 110.

In some embodiments, the first air guiding unit 140 may comprise a first fan and a first air duct arrangement configured to conduce air flow towards the shielding unit 130. In some embodiments, the first fan may be positioned above the cooking chamber 110. Also in some embodiments, each of the one or more shielding elements of the shielding unit 130 may arranged in the first air duct arrangement of the first air guiding unit 140, such that air flow from the first fan is conduced along the one or more shielding elements of the shielding unit 130.

As mentioned above, in some embodiments each of the one or more shielding elements of the shielding unit 130 may comprise a first shielding part and a second shielding part. In these embodiments, the first shielding part may be positioned between the first air duct arrangement of the first air guiding unit 140 and the respective infrared light source, and the second shielding part may be positioned between the first air duct arrangement of the first air guiding unit 140 and the cooking chamber 110.

In some embodiments, the second air guiding unit 150 may comprise a second fan and a second air duct arrangement. The second fan may be configured to conduce air flow from the cooking chamber 110 to towards the second air duct arrangement, and it may be positioned above the cooking chamber 110 to perform such function. In some embodiments, the second air duct arrangement maybe configured to facilitate air flow towards the food item received in the cooking chamber 110. For example, the second air duct arrangement may be configured to facilitate air flow towards the wall(s) of the cooking chamber 110, which may be at least partly air-permeable. Also, the second air duct arrangement may be perpendicular to an axis of symmetry which intersects the one or more infrared light sources of the infrared lighting unit 120.

The heating unit 160 comprises one or more heating elements configured to heat air flow inside the cooking apparatus 100 to create hot air circulation. In some embodiments, the heating unit may be positioned so as to correspond to the configuration of the second air guiding unit 150 such that heated air generated at the heating unit 160 can be conduced by the second air guiding unit 150 to heat the food item received inside the cooking chamber 110. Moreover, in some embodiments, the one or more heating elements may be configured to heat the air from the cooking chamber 110 in the second air duct arrangement of the second air guiding unit 150. In some embodiments, the heating unit 160 may be a steam generation unit or may comprise a steam generation unit.

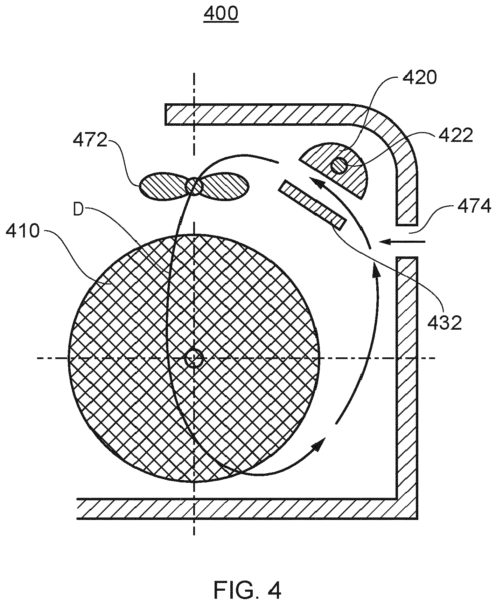

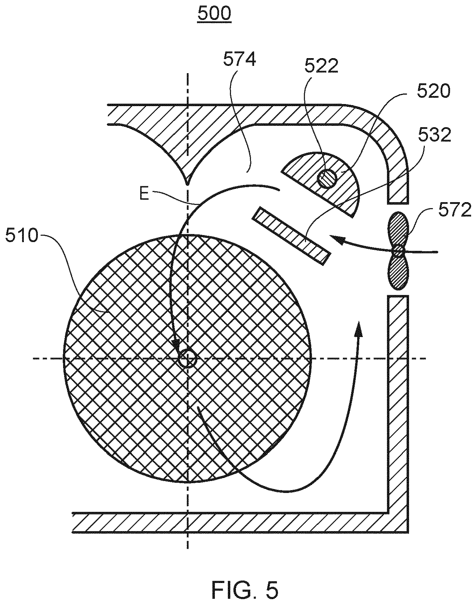

Although the first air guiding unit and the second air guiding unit are described above as separate components of the cooking apparatus, it will be appreciated that in some embodiments the first air guiding unit and the second air guiding unit may be implemented as a single integral air guiding unit that is both capable of conducing air flow through the shielding unit and circulating hot air inside the cooking apparatus 200 to heat the food item received inside the cooking chamber. Exemplary embodiments relating to such configuration will be explained in more detail below with reference to Fig. 4 and Fig. 5.

In some embodiments, the cooking apparatus 100 may comprise a processor that controls the operation of the cooking apparatus 100 and that can implement at least some of the functionalities described herein. The processor can comprise one or more processors, processing units, multi-core processor or modules that are configured or programmed to control the cooking apparatus 100 in the manner described herein. In particular implementations, the processor can comprise a plurality of software and/or hardware modules that are each configured to perform, or are for performing, functionalities as described herein.

In some embodiments, the cooking apparatus 100 may further comprise at least one user interface. Alternatively or in addition, at least one user interface 104 may be external to (i.e. separate to or remote from) the apparatus 100. For example, at least one user interface 104 may be part of another device. A user interface 104 may be for use in providing a user of the apparatus 100 with information resulting from the method described herein. Alternatively or in addition, a user interface may be configured to receive a user input. For example, a user interface may allow a user of the cooking apparatus 100 to manually enter instructions, data, or information. In these embodiments, the processor may be configured to acquire the user input from one or more user interfaces.

A user interface may be any user interface that enables the rendering (or output or display) of information to a user of the cooking apparatus 100. Alternatively or in addition, a user interface may be any user interface that enables a user of the cooking apparatus 100 to provide a user input, interact with and/or control the cooking apparatus 100. For example, the user interface may comprise one or more switches, one or more buttons, a keypad, a keyboard, a touch screen or an application (for example, on a tablet or smartphone), a display screen, a graphical user interface (GUI) or other visual rendering component, one or more speakers, one or more microphones or any other audio component, one or more lights, a component for providing tactile feedback (e.g. a vibration function), or any other user interface, or combination of user interfaces.

In some embodiments, the cooking apparatus 100 may comprise a memory. A memory can be configured to store program code that can be executed by the processor to perform the method described herein. A memory can be used to store information, data, signals and measurements acquired or made by the processor of the cooking apparatus 100.

In some embodiments, the cooking apparatus 100 may comprise a communications interface (or circuitry) for enabling the cooking apparatus 100 to communicate with any interfaces, memories and/or devices that are internal or external to the cooking apparatus 100. The communications interface may communicate with any interfaces, memories and/or devices wirelessly or via a wired connection. For example, the communications interface may communicate with one or more user interfaces wirelessly or via a wired connection. Similarly, the communications interface may communicate with the one or more memories wirelessly or via a wired connection.

It will be appreciated that Fig. 1 only shows the components required to illustrate an aspect of the cooking apparatus 100 and, in a practical implementation, the cooking apparatus 100 may comprise alternative or additional components to those shown. For example, in some embodiments the cooking apparatus 100 may not comprise a heating unit 160 (denoted by the box with dotted outline in Fig. 1).

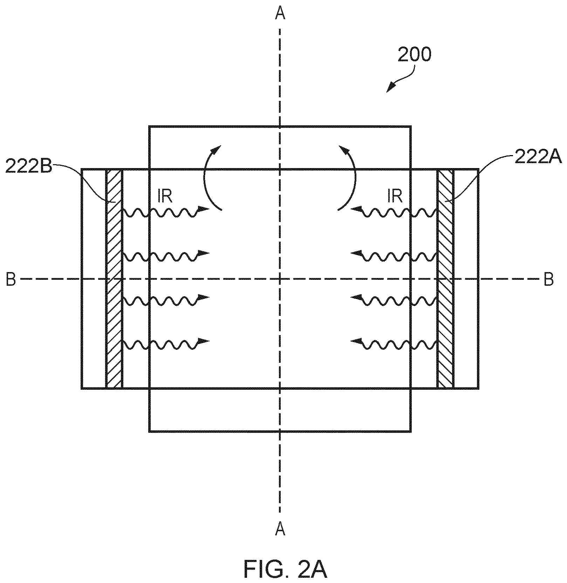

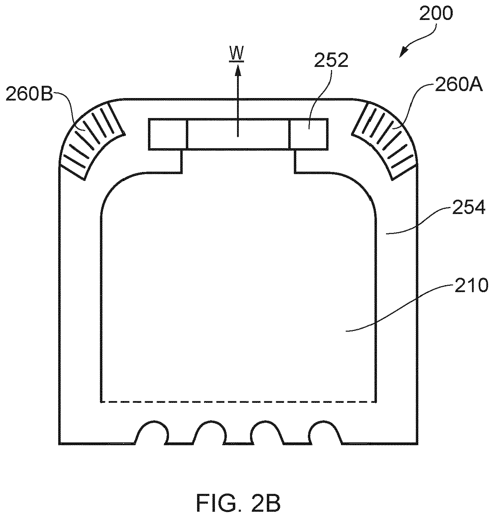

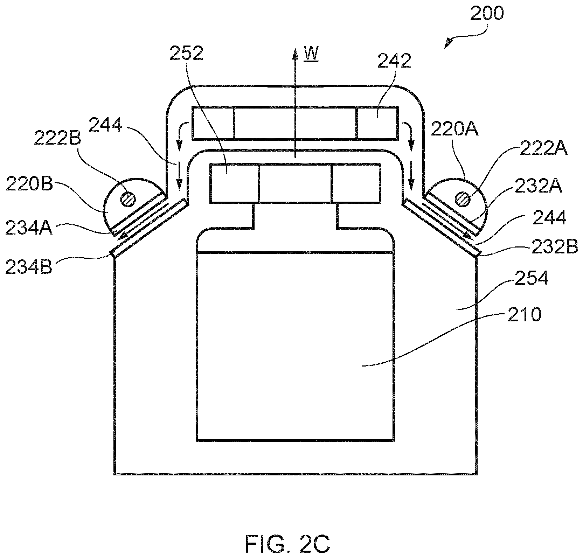

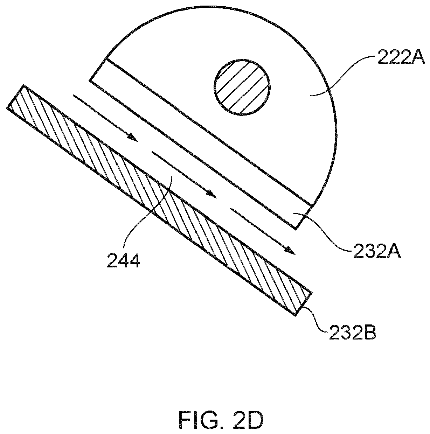

Fig. 2A, Fig. 2B, Fig. 2C, and Fig. 2D are respectively a top view, a first cross-sectional view, a second cross-sectional view, and a partial cross-sectional view of a cooking apparatus 200 according to another embodiment. In general, the cooking apparatus 200 in this embodiment comprises a cooking chamber, an infrared lighting unit, a shielding unit, a first air guiding unit, a second air guiding unit, and a heating unit. These components will be explained in more detail with reference to each of Fig. 2A, Fig. 2B, Fig. 2C, and Fig. 2D.

Referring to Fig. 2A, the infrared lighting unit of the cooking apparatus 200 is represented in the diagram as a first infrared light source 222A and a second infrared light source 222B, wherein the first and second infrared light sources 222A, 222B are respectively arranged at opposite sides of the cooking apparatus 200. Although not illustrated in Fig. 2A, the first and second infrared light sources 222A, 222B are arranged in respective tilted angles so as to provide infrared radiation towards the center of the cooking apparatus (where the cooking chamber, not shown in Fig. 2A, is located). The direction of the infrared radiation from the infrared light sources are indicated in the diagram in squiggly arrows. Lines A-A and B-B are indicated in Fig. 2A to indicate the respective cross-sections of the cooking apparatus 200 illustrated in Fig. 2B and Fig. 2C.

Referring to Fig. 2B, which is a cross-sectional view of the cooking apparatus 200 along the line A-A (of Fig. 2A), the heating unit of the cooking apparatus 200 is represented in the diagram as a first heating element 260A and a second heating element 260B, both of which are positioned above the cooking chamber 210 in the present embodiment. The heating elements 260A, 260B may comprise conventional heating wires or the like to provide the heating functionality.

In Fig. 2B, the second guiding unit of the cooking apparatus 200 is represented as a second fan 252 and a second air duct arrangement 254. The rotational axis of the second fan 252 is shown in the diagram including an arrow w indicating the direction of the rotational torque of the second fan 252. The second fan 252 is configured to conduce air flow from the cooking chamber 210 towards the second air duct arrangement 254. In this embodiment, since the second fan 252 is arranged directly above the cooking chamber 210, during operation the second fan 252 can operate to draw air from the cooking chamber 210 towards the second air duct arrangement 254.

Since the second air duct arrangement 254 is connected to the bottom side of the cooking chamber 210, which in this embodiment is at least partially air-permeable as indicated by the dotted line, air flow in the second air duct arrangement 254 can be facilitated towards the interior of the cooking chamber 210. Moreover, since the first and second heating elements 260A, 260B are positioned along the second air duct arrangement, they are configured to heat the air from the cooking chamber 210 in the second air duct arrangement 254.

In the present embodiment, the housing (not labelled) of the cooking apparatus 200 has a bottom side which forms a part of the second air duct arrangement 254 that adopts a specific shape so as to further facilitate air flow in the second air duct arrangement 254. In more detail, as shown in Fig. 2B, the bottom side of the housing of the cooking apparatus 200 can include a number of indentations so as to encourage air flow towards the bottom side of the cooking chamber 210, rather than in the opposite direction(s).

Referring to Fig. 2C, which is a cross-sectional view of the cooking apparatus 200 along the line B-B (of Fig. 2A), the infrared lighting unit is also represented as the first infrared light source 222A and the second infrared light source 222B, both of which are positioned above the cooking chamber 210 in the present embodiment.

As shown more clearly in Fig. 2C, each of the first infrared light source 222A and the second infrared light source 222B are positioned in respective tilted angles such that both infrared light sources are pointing towards the cooking chamber 210. The second air guiding unit is also represented in Fig. 2C as the second fan 252 and the second air duct arrangement 254. As the components of the second air guiding unit have been explained above with reference to Fig. 2B, further explanation will be omitted for the sake of brevity.

In the present embodiment as shown in Fig. 2C, the shielding unit comprises a first shielding element 232 and a second shielding element 234. Each of the first and second shielding elements 232, 234 comprises a first shielding part and a second shielding part. The shielding elements 232, 234 comprising the shielding parts 232A, 232B, 234A, 234B are all arranged in the first air duct arrangement 244. The shielding parts in the present embodiment are made of glass. The first shielding part of each shielding element is positioned between the first air duct arrangement 244 and the cooking chamber 210, and the second shielding part of each shielding element is positioned between the first air duct arrangement and the respective infrared light source. Moreover, the first shielding part and the second shielding part of each the shielding elements are configured to be removable from the rest of the respective shielding element.

For ease of reference, the first and second shielding parts of the first shielding element will be herein referred to as the "first top shielding part" 232A and the "first bottom shielding part" 232B, and the first and second shielding parts of the second shielding element will be herein referred to as the "second top shielding part" 234A and the "second bottom shielding part" 234B.

As shown in Fig. 2C, the first air duct arrangement is represented in the diagram as the first fan 242 and the first air duct arrangement 244. In this embodiment, the first fan 242 is positioned above the cooking chamber 210, and more precisely above the second fan 252 and the second air duct arrangement 254 of the second air guiding unit. The rotational axis of the first fan 242 is shown in the diagram including an arrow w indicating the direction of the rotational torque of the first fan 242. The first fan 242 and the first air duct arrangement 244 are configured to conduce air flow towards the shielding unit. In particular, in the present embodiment the first fan 242 can operate to create an air flow within the first air duct arrangement such that air flow is conduced along both the first shielding element 232 and the second shielding element 234, as shown by the arrows in the first air duct arrangement 244.

In fact, since the shielding elements 232, 234 in the present embodiment are arranged in the first air duct arrangement 244 as explained above, air flow from the first fan 242 is conduced along the shielding elements 232, 234. In more detail, the air flow from the first fan 242 is conduced between the first top shielding part 232A and the first bottom shielding part 232B, and between the second top shielding part 234A and the second bottom shielding part 234B. This is shown in more detail in Fig. 2D, which is a partial cross-sectional view of the infrared lighting unit and the shielding unit of the cooking apparatus of Fig. 2A. In particular, Fig. 2D shows the air flow from the first fan (not shown in the drawing) being conduced along the first top shielding part 232A and the first bottom shielding part 232B in the first duct arrangement 244, where the first top shielding part 232A is positioned to correspond to the infrared light source 222A.

Although it is described above that the heating unit (comprising the first and second heating elements) is positioned above the cooking chamber in this embodiment, it will be appreciated that in other embodiments the heating unit comprising the heating element(s) may adopt other configurations in which they are not positioned above the cooking chamber. For example, in some embodiments the heating unit (and the heating element(s)) may be positioned underneath the cooking chamber or positioned adjacent to the cooking chamber.

Although the shielding parts of the shielding elements have been referred to herein as "top" and "bottom" shielding parts, it will be appreciated in other embodiments the shielding parts of the shielding elements may not be positioned with a "top" and "bottom" configuration. For example, in some embodiments the first and second shielding elements may be arranged such that they are horizontally adjacent to each other.

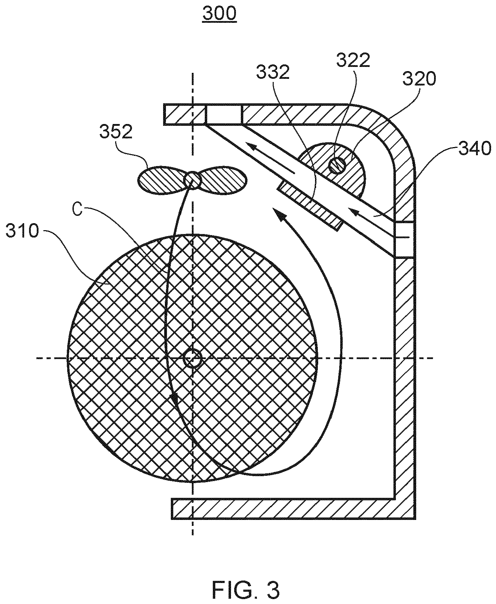

Fig. 3 is a partial cross-sectional view of a cooking apparatus 300 according to another embodiment. The cooking apparatus 300 in this embodiment comprises a cooking chamber 310, which is a cylindrical basket configured to rotate along a central axis inside the housing of the cooking apparatus 300. The cooking apparatus 300 further comprises an infrared lighting unit 320, a shielding unit, a first air guiding unit 340, and a second air guiding unit.

In Fig. 3, only a first infrared light source 322 of the infrared lighting unit 320 is shown, but it will be appreciated that the infrared lighting unit further comprises a second infrared light source which has been omitted in the drawing. Similarly, only a first shielding element 332 of the shielding unit and a part of a first air duct arrangement of the first air guiding unit 340 are shown in the drawing, and it will be appreciated that the shielding unit further comprises a second shielding element and the first air guiding unit further comprises another part of the first air duct arrangement which corresponds to the positions of the second shielding element and the second infrared light source, both of which are omitted in Fig. 3.

As shown in Fig. 3, the first air guiding unit 340 in the present embodiment only comprise a first air duct arrangement 344 (shown partially in the drawing). The first air guiding unit 340 is configured to conduce air flow through the first shielding element 332. In more detail, since the first shielding element 332 in the present embodiment only comprises a first shielding part, and the first shielding part 332 is arranged between the cooking chamber 310 and the first air duct arrangement of the first air guiding unit, air flow is conduced along the first shielding part 332 in the first air duct arrangement. The air flow may enter via a first aperture in the housing of the cooking apparatus 300 and exit via a second aperture in the housing of the cooking apparatus 300, the first and second apertures being arranged at opposite ends of the first air duct arrangement.

The second air guiding unit in the present embodiment is represented by the second fan 352 and the air flow direction C in the second air duct arrangement (not explicitly shown in the drawing). The second air guiding unit is configured to circulate hot air inside the cooking apparatus 300 to heat the food item (not shown) received inside the cooking chamber 310. Specifically, in this embodiment, the second fan 352 is configured to conduce air flow from the cooking chamber 3410 towards the second duct arrangement.

Thus, during use of the cooking apparatus 300, the infrared lighting unit can operate to provide infrared radiation towards the food item received in the cooking chamber 310 to cause an increased in temperature of the food item. The increased temperature of the food item would indirectly cause an increase in temperature of the surrounding air by conduction. The second fan 352 of the second air guiding unit can then operate to circulate the heated air in the cooking apparatus 300 so as to further facilitate cooking of the food item in the cooking chamber 310. At the same time, the temperature at the shielding unit is also increased due to conduction, and the first air guiding unit can operate to conduce air flow along the shielding unit so as to lower the temperature at the shielding unit. Hence, a short cooking time and high quality of cooking can be ensured while reducing the amount of unwanted smoke and smell emissions.

Fig. 4 is a partial cross-sectional view of a cooking apparatus according to another embodiment. The cooking apparatus 400 in this embodiment is substantially similar to the cooking apparatus 300 described with reference to Fig. 3. Specifically, the cooking apparatus 400 of the present embodiment also comprises a cooking chamber 410, which is also a cylindrical basket configured to rotate along a central axis inside the housing of the cooking apparatus 400, as well as an infrared lighting unit 420 and a shielding unit. However, unlike the cooking apparatus 300 of Fig. 3, the cooking apparatus 400 in the present embodiment comprises a single integral air guiding unit which is configured to both conduce air flow through the shielding unit and to circulate hot air inside the cooking apparatus 400, instead of a first air guiding unit and a second air guiding unit.

In Fig. 4, only a first infrared light source 422 of the infrared lighting unit 420 is shown, but it will be appreciated that the infrared lighting unit further comprises a second infrared light source which has been omitted in the drawing. Similarly, only a first shielding element 432 of the shielding unit is shown in the drawing, and it will be appreciated that the shielding unit further comprises a second shielding element which is omitted in Fig. 4.

The integral air guiding unit in the present embodiment is represented by the fan 472 of the air guiding unit, and the air flow direction D in an air duct arrangement (not explicitly shown in the drawing) of the air guiding unit. In more detail, the fan 472 is configured to operate to circulate air flow inside the cooking apparatus 400 to allow heating of the food item (not shown) received inside the cooking chamber 410 as indicated by part of the air flow direction D in Fig. 4. Furthermore, the air flow is also conduced along the shielding unit - more specifically since the first shielding element in the present embodiment only comprises a first shielding part, and the first shielding part 432 is arranged between the cooking chamber 410 and a part of the air duct arrangement of the integral air guiding unit, air flow is conduced along the first shielding part 432. Also, in this embodiment, an aperture 474 is further provided at the housing of the cooking apparatus 400 so as to allow additional air flow along the shielding unit so as to facilitate cooling down of the shielding unit.

Thus, during use of the cooking apparatus 400, the infrared lighting unit can operate to provide infrared radiation towards the food item received in the cooking chamber 410 to cause an increased in temperature of the food item. The increased temperature of the food item would indirectly cause an increase in temperature of the surrounding air by conduction. The fan 472 of the integral air guiding unit can then operate to circulate the heated air in the cooking apparatus 400 so as to further facilitate cooking of the food item in the cooking chamber 410. At the same time, the temperature at the shielding unit is also increased due to conduction, and the integral air guiding unit can operate to conduce air flow along the shielding unit, with the introduction of external air via the aperture 474, so as to lower the temperature at the shielding unit. Hence, a short cooking time and high quality of cooking can be ensured while reducing the amount of unwanted smoke and smell emissions.

Fig. 5 is a partial cross-sectional view of a cooking apparatus according to another embodiment. The cooking apparatus 500 in this embodiment is substantially similar to the cooking apparatus 400 as described with reference to Fig. 4. Specifically, the cooking apparatus 500 of the present embodiment also comprises a cooking chamber 510, which is also a cylindrical basket configured to rotate along a central axis inside the housing of the cooking apparatus 500, as well as an infrared lighting unit 420 and a shielding unit. The cooking apparatus 500 in the present embodiment also comprises a single integral air guiding unit which is configured to both conduce air flow through the shielding unit and to circulate hot air inside the cooking apparatus 500, instead of a first air guiding unit and a second air guiding unit.

In Fig. 5, only a first infrared light source 522 of the infrared lighting unit 520 is shown, but it will be appreciated that the infrared lighting unit further comprises a second infrared light source which has been omitted in the drawing. Similarly, only a first shielding element 532 of the shielding unit is shown in the drawing, and it will be appreciated that the shielding unit further comprises a second shielding element which is omitted in Fig. 5.

The integral air guiding unit in the present embodiment is represented by the fan 572 of the air guiding unit, and the air flow direction E in an air duct arrangement 574 of the air guiding unit. In more detail, the fan 572 is positioned at an aperture of the housing of the cooking apparatus 500 via which air can be introduced from the external surroundings of the cooking apparatus 500. The fan 572 is configured to facilitate air flow along the shielding unit. More specifically, since the shielding element in the present embodiment only comprises a first shielding part 532, and the first shielding part 532 is arranged between the cooking chamber 510 and a part of the air duct arrangement of the integral air guiding unit, air flow created by the fan 572 can be conduced along the first shielding part 532.

Furthermore, this air flow created by the fan 572 is further circulated by the integral air guiding unit inside the cooking apparatus 500 to allow heating of the food item (not shown) received inside the cooking chamber 510 as indicated by part of the air flow direction E in Fig. 5. Specifically, the air duct arrangement 574of the integral air guiding unit in the present embodiment adopts a specific configuration on the inner surface so as to guide the air flow such that air conduced along the shielding unit can then be circulated towards the cooking chamber 510. The air flow can then return towards the space adjacent to the fan 572 (at least in part by convection) to be circulated once again.

Thus, during use of the cooking apparatus 500, the infrared lighting unit can operate to provide infrared radiation towards the food item received in the cooking chamber 510 to cause an increased in temperature of the food item. The increased temperature of the food item would indirectly cause an increase in temperature of the surrounding air by conduction. The fan 572 of the integral air guiding unit can then operate to at least partly facilitate the circulation of heated air in the cooking apparatus 500 so as to further speed up cooking of the food item in the cooking chamber 510. At the same time, the temperature at the shielding unit is also increased due to conduction, and the integral air guiding unit can operate to conduce air flow along the shielding unit, with the introduction of external air via the aperture and the fan 574, so as to lower the temperature at the shielding unit. Hence, a short cooking time and high quality of cooking can be ensured while reducing the amount of unwanted smoke and smell emissions.

There is thus provided an improved cooking apparatus which overcomes the existing problems.

Variations to the disclosed embodiments can be understood and effected by those skilled in the art in practicing the claimed invention, from a study of the drawings, the disclosure and the appended claims. As used herein, the terms "first", "second" and so forth refer to different elements. The singular forms "a" and "an" are intended to include the plural forms as well, unless the context clearly indicates otherwise. The terms "comprises", "comprising", "has", "having", "includes" and/or "including" as used herein, specify the presence of stated features, elements, and/or components and the like, but do not preclude the presence or addition of one or more other features, elements, components and/or combinations thereof. The term "based on" is to be read as "based at least in part on". The term "one embodiment" and "an embodiment" are to be read as "at least one embodiment". The term "another embodiment" is to be read as "at least one other embodiment". The mere fact that certain measures are recited in mutually different dependent claims does not indicate that a combination of these measures cannot be used to advantage. Any reference signs in the claims should not be construed as limiting the scope.

## Claims

1. A cooking apparatus (100) comprising:
a cooking chamber (110) configured to receive a food item;
an infrared lighting unit (120) comprising one or more infrared light sources configured to provide infrared radiation to the food item received in the cooking chamber, the infrared lighting unit being positioned such that the food item is exposed to infrared radiation from the one or more infrared light sources;
a shielding unit (130) comprising one or more shielding elements respectively positioned between each of the one or more infrared light sources of the infrared lighting unit and the cooking chamber;
a first air guiding unit (140) configured to conduce air flow through the shielding unit; and
a second air guiding unit (150) configured to circulate hot air inside the cooking apparatus to heat the food item received inside the cooking chamber.

2. The cooking apparatus (100) according to claim 1, further comprising a heating unit (160) comprising one or more heating elements configured to heat air flow inside the cooking apparatus to create hot air circulation.

3. The cooking apparatus (100) according to claim 2, wherein the heating unit (160) is positioned so as to correspond to the configuration of the second air guiding unit (150) such that heated air generated at the heating unit can be conduced by the second air guiding unit to heat the food item received inside the cooking chamber (110).

4. The cooking apparatus according (100) to any one of the preceding claims, wherein the first air guiding unit (140) comprises a first fan and a first air duct arrangement configured to conduce air flow towards the shielding unit (130).

5. The cooking apparatus (100) according to any one of the preceding claims, wherein the second air guiding unit (150) comprises a second fan and a second air duct arrangement, the second fan being configured to conduce air flow from the cooking chamber (110) towards the second air duct arrangement.

6. The cooking apparatus (100) according to claim 5 when dependent on claim 2 or any claim dependent on claim 2, wherein the one or more heating elements are configured to heat the air from the cooking chamber (110) in the second air duct arrangement.

7. The cooking apparatus (100) according to claim 5 or claim 6, wherein the second air duct arrangement is configured to facilitate air flow towards the food item received in the cooking chamber (110).

8. The cooking apparatus (100) according to any one of claims 5 to 7, wherein the second air duct arrangement is perpendicular to an axis of symmetry which intersects the one or more infrared light sources.

9. The cooking apparatus (100) according claim 4 or any one of claims 5 to 8 when dependent on claim 4, wherein the one or more shielding elements are arranged in the first air duct arrangement of the first air guiding unit (140), such that air flow from the first fan is conduced along the one or more shielding elements.

10. The cooking apparatus (100) according to any one of the preceding claims, wherein each of the one or more shielding elements comprises a first shielding part and a second shielding part, wherein the first shielding part is positioned between the first air duct arrangement and the respective infrared light source, and the second shielding part is positioned between the first air duct arrangement and the cooking chamber (110).

11. The cooking apparatus (100) according to claim 10, wherein at least one of the first shielding part and the second shielding part of each of the one or more shielding elements is configured to be removable from the rest of the respective shielding element.

12. The cooking apparatus (100) according to any one of the preceding claims, wherein the one or more shielding elements comprise material having a permeability level to infrared radiation above a predetermined threshold.

13. The cooking apparatus (100) according to any one of the preceding claims, wherein the infrared lighting unit (120) comprises a first infrared light source and a second infrared light source, the first infrared light source being positioned such that it corresponds to a first side of the cooking apparatus and the second infrared light source being positioned such that it corresponds to a second side of the cooking apparatus, wherein the first side is opposite to the second side.

14. The cooking apparatus (100) according to any one of the preceding claims, wherein each of the one or more infrared light sources is configured such that it provides infrared radiation towards the food item received in the cooking chamber (110) in a tilted angle.

15. The cooking apparatus (100) according to any one of the preceding claims, wherein the infrared lighting unit (120) is configured such that, in a self-cleaning mode of the cooking apparatus, the one or more infrared light sources are configured to operate for a predetermined time period in order to increase the temperature at the respective one or more shielding elements.
